(19) Europäisches Patentamt
European Patent Office
Office européen des brevets

(11) **EP 4 637 085 A1**

(12) **EUROPEAN PATENT APPLICATION**
published in accordance with Art. 153(4) EPC

(43) Date of publication:
**22.10.2025 Bulletin 2025/43**

(21) Application number: **23925950.0**

(22) Date of filing: **28.08.2023**

(51) International Patent Classification (IPC):
***H04L 12/40*** (2006.01) ***H04L 47/10*** (2022.01)

(52) Cooperative Patent Classification (CPC):
**H04L 9/40; H04L 12/40; H04L 47/10; H04L 47/125**

(86) International application number:
**PCT/CN2023/115335**

(87) International publication number:
**WO 2024/183246 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.03.2023 CN 202310203043**

(71) Applicant: **Guangzhou Automobile Group Co., Ltd.**
**Guangzhou, Guangdong 511434 (CN)**

(72) Inventors:
• **WU, Huairen**
  **Guangzhou, Guangdong 511434 (CN)**
• **HUANG, Zhongshan**
  **Guangzhou, Guangdong 511434 (CN)**
• **CHE, Long**
  **Guangzhou, Guangdong 511434 (CN)**
• **LIU, Xiaojing**
  **Guangzhou, Guangdong 511434 (CN)**
• **YANG, Rui**
  **Guangzhou, Guangdong 511434 (CN)**

(74) Representative: **Metida**
**Gyneju str. 16**
**01109 Vilnius (LT)**

(54) **BUS LOAD REDUCING METHOD, SYSTEM, COMPUTING APPARATUS, STORAGE MEDIUM AND VEHICLE**

(57) This application discloses a method for reducing a CAN bus load, and the method includes at least: performing real-time monitoring to obtain a current load rate of all network nodes of a same channel on the CAN bus; when the monitored current load rate is greater than a preset maximum load rate threshold, acquiring priority information of each CAN message transmitted by all the network nodes of the channel in a current cycle; and acquiring a strategy that is adopted by each of the network nodes and corresponds to a priority level of the CAN message to perform load reduction adjustment on the CAN message of at least one priority, where the load reduction adjustment includes at least dynamic peak-shifting transmission or/and transmission cycle extension. This application further provides a system, a computing apparatus, a storage medium, and a vehicle for reducing a CAN bus load. Through the implementation of this application, a bus load can be dynamically reduced, the real-time performance of key information can be ensured, and the stability and efficiency of CAN bus communication can be improved.

FIG. 1

**Description**

**FIELD OF TECHNOLOGY**

This application relates to the technical field of bus communication in automobiles, and specifically, to a method, a system, a computing apparatus, a storage medium and a vehicle for reducing a bus load.

**BACKGROUND**

With the increasingly rich functions of automobiles and the evolution of a vehicle-borne electrical/electronic architecture, there are more and more electronic products in vehicles, and there are more and more interactive signals between different electronic control units (Electronic Control Unit, ECU) on the vehicles. Currently, mainstream communication buses used in the vehicles include CAN (Controller Area Network) and CANFD (CAN with Flexible Data-Rate) architectures. However, in the existing bus architecture, if multiple ECUs simultaneously send out high-frequency signals in a certain period of time, a bus load will be instantly increased, and the processing capacity of each ECU cannot be completely synchronized. If a key ECU cannot keep up with the processing capacity, communication data will be abnormal or not received, thereby affecting the implementation of corresponding functions and causing safety hazards such as out-of-control vehicles and power loss in serious cases.

At present, a bus load rate is still prudently controlled in this industry. In vehicle operation, the load rate is generally not controlled. Generally, corresponding components are verified through tests when being in operation. When the average load rate of a test bus is not high, such components are considered qualified. However, sometimes, when the vehicle is in a complex operating condition and multiple ECUs simultaneously send out bus signals at a certain time, the bus load will remain high, and this complex operating condition is difficult to find in a preliminary test.

To sum up, in the complex operating condition in the prior art, the risk of function loss may occur due to the excessively high bus load rate, so the bus stability needs to be improved. In addition, in the condition of the long-term high load rate, the pressure of information interaction between key nodes is heavy, affecting the real-time performance of key information.

**SUMMARY**

A technical problem to be solved by this application is to provide a method, a system, a computing apparatus, a storage medium and a vehicle for reducing a bus load. Through this application, a bus load can be dynamically reduced, the real-time performance of key information can be ensured, and the stability and efficiency of CAN bus communication can be improved.

To solve the above technical problem, one aspect of this application provides a method for reducing a CAN bus load, and the method includes at least the following steps:

performing real-time monitoring to obtain a current load rate of all network nodes of a same channel on the CAN bus; when the monitored current load rate is greater than a preset maximum load rate threshold, acquiring priority information of each CAN message transmitted by all the network nodes of the channel in a current cycle; and acquiring a strategy that is adopted by each of the network nodes and corresponds to a priority level of the CAN message to perform load reduction adjustment on the CAN message of at least one priority, where the load reduction adjustment includes at least dynamic peak-shifting transmission or/and transmission cycle extension.

The performing real-time monitoring to obtain a current load rate of all network nodes of a same channel on the CAN bus further includes
monitoring all CAN messages on the CAN bus; calculating an actual total CAN bus load in the current cycle; and dividing the actual total CAN bus load by a maximum theoretical CAN bus load to obtain the current load rate.

When the monitored current load rate is greater than a preset maximum load rate threshold, the acquiring priority information of each CAN message transmitted by all the network nodes of the channel in a current cycle further includes:

acquiring a priority of each CAN message transmitted by all the network nodes of the channel in the current cycle, where the priority includes a maximum priority, a second priority and a third priority; and acquiring a quantity of CAN messages with the third priority.

The acquiring a strategy that is adopted by each of the network nodes and corresponds to a priority level of the CAN message to perform load reduction adjustment on the CAN message of at least one priority so as to allow a real-time CAN bus load of the channel to be a normal range further includes:

gradually reducing the quantity of CAN messages with the third priority transmitted in each cycle; and determining whether the adjusted CAN bus load of the channel is less than the maximum load rate threshold; and

if the adjusted CAN bus load of the channel is less than the maximum load rate threshold, controlling, in each cycle, to transmit only the reduced quantity of CAN messages with the third priority in a dynamic circular peak-shifting transmission manner, where the reduced quantity is at least one; or

if the adjusted CAN bus load of the channel is not less than the maximum load rate threshold, controlling, in each cycle, to transmit only one of the CAN messages with the third priority in a dynamic circular peak-shifting transmission manner, and extending a transmission cycle of each CAN message with the second priority.

The method further includes:

after the load reduction adjustment, if the current load rate of all the network nodes of the channel is greater than a preset minimum load rate threshold, gradually recovering a transmission cycle of the CAN message with the second priority, and gradually recovering a quantity of transmitted CAN messages with the third priority in each cycle.

the controlling, in each cycle, to transmit only the reduced quantity of CAN messages with the third priority in a dynamic circular peak-shifting transmission manner specifically includes:

in the current transmission cycle, selecting and transmitting the reduced quantity of CAN messages with the third priority;

in a next transmission cycle, selecting and transmitting the reduced quantity of next CAN messages with the third priority in a predetermined order; and

continuing such an operation cyclically to make each of the CAN messages with the third priority be transmitted in sequence and cyclically.

The method further includes:

generating a priority message of each of the network nodes according to a load reduction processing strategy determined by the load reduction processing unit; setting a control signal bit of each priority in the priority message, and transmitting the control signal bit to each of the network nodes to control a transmission strategy of a current CAN message of each of the network nodes;

where if a control signal bit of the CAN message with the third priority is 1, controlling the CAN message with the third priority of the network nodes to be normally transmitted in a current transmission cycle; or if a control signal bit of the CAN message with the third priority is 1, controlling the CAN message with the third priority of the network nodes not to be transmitted in a current transmission cycle; and

if a control signal bit of the CAN message with the second priority is 1, controlling the CAN message with the second priority of the network nodes to be normally transmitted in a current transmission cycle; or if a control signal bit of the CAN message with the second priority is 0, controlling the CAN message with the second priority of the network nodes to be transmitted in a predetermined extended transmission cycle.

One aspect of this application further provides a system for reducing a CNA bus load, and the system includes at least:

a monitoring processing unit, configured to perform real-time monitoring to obtain a current load rate of all network nodes of a same channel on the CAN bus;

a priority information acquisition unit, configured to: when the monitored current load rate is greater than a preset maximum load rate threshold, acquire priority information of each CAN message transmitted by all the network nodes of the channel in a current cycle; and

a load reduction processing unit, configured to acquire a strategy that is adopted by each of the network nodes and corresponds to a priority level of the CAN message to perform load reduction adjustment on the CAN message of at least one priority, where the load reduction adjustment includes at least dynamic peak-shifting transmission or/and transmission cycle extension.

The monitoring processing unit further includes:

a monitoring unit, configured to monitor all CAN messages on the CAN bus; and

a calculating unit, configured to calculate an actual total CAN bus load in the current cycle, and divide the actual total CAN bus load by a maximum theoretical CAN bus load to obtain the current load rate.

The priority information acquisition unit further includes:

a priority level information acquisition unit, configured to acquire a priority of each CAN message transmitted by all the network nodes of the channel in the current cycle, where the priority includes a maximum priority, a second priority and a third priority; and

a quantity acquisition unit, configured to acquire at least a quantity of CAN messages with the third priority.

The load reduction processing unit further includes:

a load reduction quantity adjustment unit, configured to: gradually reduce the quantity of CAN messages with the third priority transmitted in each cycle, and determine whether the adjusted CAN bus load of the channel is less than the maximum load rate threshold;

a first adjustment and processing unit, configured to: if the load reduction quantity adjustment unit determines that the adjusted CAN bus load of the channel is less than the maximum load rate threshold, control, in each cycle, to transmit only the reduced quantity of CAN messages with the third priority in a dynamic circular peak-shifting transmission manner, where the reduced quantity is at least one; and

a second adjustment and processing unit, configured to: if the load reduction quantity adjustment unit determines that the adjusted CAN bus load of the channel is not less than the maximum load rate threshold, control, in each cycle, to transmit only one of the CAN messages with the third priority in a dynamic circular peak-shifting transmission manner, and extend a transmission cycle of each CAN message with the second priority.

The system further includes:

a recovery processing unit, configured to: after the load reduction adjustment, if the current load rate of all the network nodes of the channel is greater than a preset minimum load rate threshold, gradually recover a transmission cycle of the CAN message with the second priority, and gradually recover a quantity of transmitted CAN messages with the third priority in each cycle.

**In** the first adjustment and processing unit, the controlling, in each cycle, to transmit only the reduced quantity of CAN messages with the third priority in a dynamic circular peak-shifting transmission manner specifically includes:

in the current transmission cycle, selecting and transmitting the reduced quantity of CAN messages with the third priority;

in a next transmission cycle, selecting and transmitting the reduced quantity of next CAN messages with the third priority in a predetermined order; and

continuing such an operation cyclically to make each of the CAN messages with the third priority be transmitted in sequence and cyclically.

The system further includes:

a priority message generating unit, configured to: generate a priority message of each of the network nodes according to a load reduction processing strategy determined by the load reduction processing unit; set a control signal bit of each priority in the priority message, and transmit the control signal bit to each of the network nodes to control a transmission strategy of a current CAN message of each of the network nodes;

where if a control signal bit of the CAN message with the third priority is 1, the priority message generating unit is configured to control the CAN message with the third priority of the network nodes to be normally transmitted in a current transmission cycle; or if a control signal bit of the CAN message with the third priority is 1, the priority message generating unit is configured to control the CAN message with the third priority of the network nodes not to be transmitted in a current transmission cycle; and

if a control signal bit of the CAN message with the second priority is 1, the priority message generating unit is configured to control the CAN message with the second priority of the network nodes to be normally transmitted in a current transmission cycle; or if a control signal bit of the CAN message with the second priority is 0, the priority message generating unit is configured to control the CAN message with the second priority of the network nodes to be transmitted in a predetermined extended transmission cycle.

Another aspect of this application further provides a computer-readable storage medium on which a computer program is stored, where when the computer program is executed by a processor, the steps of the method are implemented.

Still another aspect of this application further provides a computing apparatus, where the computing apparatus includes a memory, a processor, and a computer program that is stored in the memory and executable on the processor, where when the computer program is executed by the processor, the steps of the method are implemented.

Yet another aspect of this application provides a vehicle, and the vehicle has a CAN bus architecture, where the CAN bus architecture includes at least one CAN message gateway controller and a plurality of network nodes connected to a CAN bus, where

the system for reducing a CAN bus load as previously described is deployed in the CAN message gateway controller; each of the network nodes is used for monitoring a control signal bit of a priority message from the CAN message gateway controller and determining a transmission strategy of a CAN message thereof, and the determining a transmission strategy of a CAN message thereof includes:

if a control signal bit of a CAN message with a third priority is 1, normally transmitting the CAN message with a third priority in a current transmission cycle; or if a control signal bit of a CAN message with a third priority is 0, not transmitting the CAN message with a third priority in a current transmission cycle; and
if a control signal bit of a CAN message with a second priority is 1, normally transmitting the CAN message with a second priority in a current transmission cycle; or if a control signal bit of a CAN message with a second priority is 0, normally transmitting the CAN message with a second priority in a predetermined extended transmission cycle.

The embodiments of this application have the following beneficial effects:
This application provides a method, a system, a computing apparatus, a storage medium, and a vehicle for reducing a bus load. A main monitoring node (such as a gateway controller) is defined in the CAN node of the same channel and used for monitoring the bus load rate. If the current load rate is excessively high, the main monitoring node makes timely response to controlling the reduction of the quantity of messages with the lowest priority and the delay of the transmission cycle of messages with the second lowest priority, thereby implementing a peak-shifting transmission strategy. The method and the system provided in this application can better reduce the bus load rate dynamically and improve the safety and efficiency of CAN bus communication.

A bus load rate control mechanism provided in this application can well avoid the risk of function loss due to the excessively high bus load rate in the complex operating condition, and improve the bus stability of the whole vehicle.

The method provided in this application can greatly reduce an information interaction pressure between key nodes in the condition of the long-term excessively high load rate, so that the real-time performance of key information (high-priority CAN messages) can be always guaranteed at all times, and information availability can be maintained.

## BRIEF DESCRIPTION OF THE DRAWINGS

In order to more clearly explain embodiments of this application or the technical solution in the prior art, the accompanying drawings needed in the descriptions of the embodiments or the prior art will be briefly introduced below. Apparently, the accompanying drawings in the following descriptions are merely some embodiments of this application. Other accompany drawings, obtained by ordinary persons skilled in the art based on these drawings without any creative labor, still fall within the scope of this application.

FIG. 1 shows a schematic diagram of a main step of a method for reducing bus load according to an embodiment of this application;
FIG. 2 shows a structural schematic diagram of a data structure of a CANFD message according to this application;
FIG. 3 shows a schematic diagram of a dynamic peak-shifting transmission according to this application;
FIG. 4 shows a structural schematic diagram of a system for reducing bus load according to an embodiment of this application;
FIG. 5 shows a structural schematic diagram of a monitoring processing unit in FIG. 4;
FIG. 6 is a schematic structural diagram of a priority information acquisition unit in FIG. 4; and
FIG. 7 shows a schematic structural diagram of a load reduction processing unit in FIG. 4.

## DESCRIPTION OF THE EMBODIMENTS

In order to make the purpose, technical solution and advantages of this application more clear, this application will be further described in detail with the accompanying drawings.

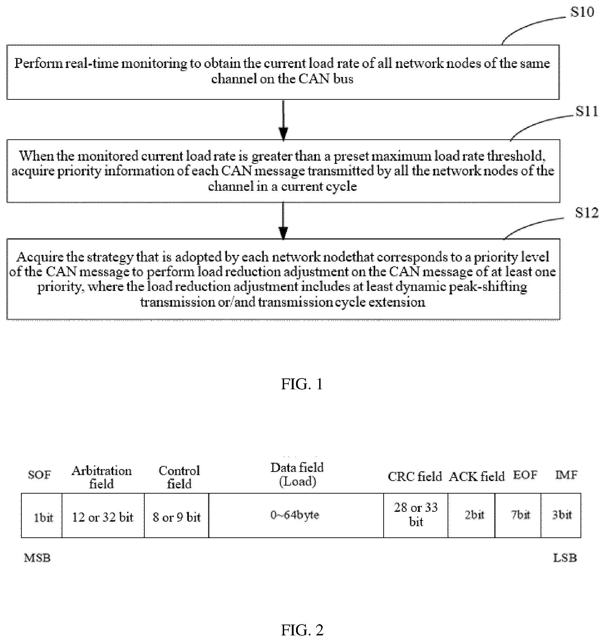

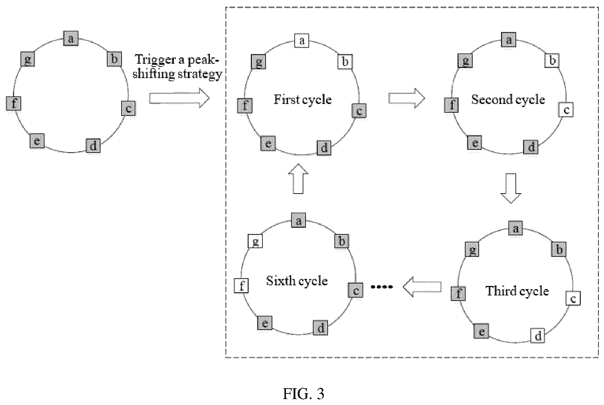

FIG. 1 shows a schematic diagram of a main step of a method for reducing CNA bus load according to an embodiment of this application. Referring to FIG. 2 and FIG. 3, in this embodiment, the method at least includes the following steps:
Step S10. Performing real-time monitoring to obtain a current load rate of all network nodes of a same channel on the CAN bus.

In a specific embodiment, the Step S10 specifically includes:
monitoring all CAN messages on the CAN bus; calculating an actual total CAN bus load in the current cycle; and dividing the actual total CAN bus load by a maximum theoretical CAN bus load to obtain the current load rate.

In this application, the CAN message may be either a standard CAN message or a CANFD message, and cannot be in detail distinguished below. The CAN message as hereinafter described includes a CANFD message, and the CAN bus as hereinafter described includes a CANFD bus.

Refer to a schematic diagram of a data structure of a CANFD message in FIG. 2. An example is taken to illustrate the current load rate. The CANFD message is taken as an example. For a single-channel CANFD bus, it is known that a bus baud rate B=2Mbps, a transmission interval of a specified CAN message t=40ms, and each frame size f=75 bytes. It is assumed that a quantity of ECUs to simultaneously transmit messages on the bus is N, the frame size f of CANFD can be obtained according to FIG. 2:

$$f=(1+32+9+33+2+7+3)/8+64=87/8+64<11+64=75 \text{ bytes};$$

Therefore, the maximum theoretical bus load Qmax and the actual total bus load Qcan can be obtained as follows:

$$Qmax=(B*1024)/8=128*B=256kbytes/s;$$

$$Qcan=(N*(1000/t)*f)/1024=(1000N*f)/(1024*t)(kbytes/s);$$

The maximum theoretical load Qmax is divided by the actual total bus load Qcan to obtain the current load rate W of the CAN message:

$$W=Qcan/Qmax=(1000N*f)/(1024*t*Qmax)=(1000N*f)/(1024*t*128*B);$$

Understandably, if W=a% is required and a is a load factor, an expression of a=f(N, t) can be obtained; a=f(N, t) is analyzed; if W=a%,

$$(1000N*f)/(1024*t*128*B)=a\%;$$

the expression is simplified to obtain N=(4096*a*B*t)/(3125*f)=(8192*at)/234375;
an equation is transformed, where a=(234357*N)/(8192*t);

According to the above formula:

if t is a constant, a and N are in direct proportion, a=k*N, where k=234357/(8192*t); or
if n is a constant, a and t are in inverse proportion, a=k/t, where k=(234357*N)/8192.

It can be seen that the current load rate may be adjusted by adjusting the values of N and t.

Step S11. When the monitored current load rate is greater than a preset maximum load rate threshold, acquiring priority information of each CAN message transmitted by all the network nodes of the channel in a current cycle.

In a specific embodiment, the Step S11 specifically includes:
acquiring a priority of each CAN message transmitted by all the network nodes of the channel in the current cycle, where the priority includes a maximum priority, a second priority and a third priority; and acquiring a quantity of CAN messages with the third priority.

It can be understood that, in an embodiment of this application, all CAN messages (standard CAN messages and CANFD messages) can be prioritized in advance, and a classification manner is as shown in Table 1 below.

Table 1 CAN message classification list

| Priority code | Classification principle | Remarks |
|---|---|---|
| First priority (A) | CAN message cannot be lost and a transmission cycle cannot be changed | Cyclic messages or event messages are included |
| Second priority (B) | CAN message cannot be lost but the transmission cycle can be adjusted | The same as above |
| Third priority (C) | CAN messages can be lost and the transmission cycle can be adjusted | The same as above, especially for debugging information or log information, which does not affect the implementation of functions, such messages can be lost. |

Step S12. Acquiring a strategy that is adopted by each of the network nodes and corresponds to a priority level of the CAN message to perform load reduction adjustment on the CAN message of at least one priority, where the load reduction adjustment includes at least dynamic peak-shifting transmission or/and transmission cycle extension.
The Step S12 specifically includes:

Step S120. Gradually reducing the quantity of CAN messages with the third priority transmitted in each cycle; and determining whether the adjusted CAN bus load of the channel is less than the maximum load rate threshold.

Step S121. If the adjusted CAN bus load of the channel is less than the maximum load rate threshold, controlling, in each cycle, to transmit only the reduced quantity of CAN messages with the third priority in a dynamic circular peak-shifting transmission manner, where the reduced quantity is at least one.

In a specific embodiment, the Step S121 specifically includes:

in the current transmission cycle, selecting and transmitting the reduced quantity of CAN messages with the third priority;
in a next transmission cycle, selecting and transmitting the reduced quantity of next CAN messages with the third priority in a predetermined order; and
continuing such an operation cyclically to make each of the CAN messages with the third priority be transmitted in sequence and cyclically.

As shown in FIG 3, in the embodiment of this application, that each ECU has equal rights to transmit the messages and the priority level of the messages are considered, a dynamic circular peak-shifting transmission strategy is formulated. Specifically, when the current bus load rate W exceeds a maximum load rate threshold (Wmax), a peak-shifting control strategy for the messages with the third priority (C) is activated. It is assumed that controlling the quantity N of ECUs is taken as an example, seven ECUs simultaneously transmit the messages, causing the excessively high bus load rate. In this case, a controller gateway module activates the peak-shifting strategy, and calculates the quantity of ECUs to simultaneously transmit the messages with the third priority (C) being five, the current bus load rate is within the maximum load rate threshold. Consequently, the controller gateway module transmits the bus load control signal bit in cycles (such as 1S) to cyclically enable five out of the seven ECUs on the bus for message transmission. It can be understood that FIG. 3 shows only an example, and in other embodiments, other similar control manners (such as randomly generating objects to be sent in each batch) can be adopted to achieve the same effect.
Step S122. If the adjusted CAN bus load of the channel is not less than the maximum load rate threshold, controlling, in each cycle, to transmit only one of the CAN messages with the third priority in a dynamic circular peak-shifting transmission manner, and extending a transmission cycle of each CAN message with the second priority.
It can be understood that in some embodiments, if the load reduction adjustment is performed only on the CAN messages with the third priority not to achieve the effect, the load reduction adjustment is performed on the messages with the second priority (B). The load reduction adjustment is performed on the CAN messages with the second priority by extending the transmission cycle.
After the load reduction adjustment, in real time monitor the current load rate. If the current load rate of all the network nodes of the channel is greater than a preset minimum load rate threshold (Wmin), gradual recover a transmission cycle of the CAN message with the second priority, and gradually recover a quantity of transmitted CAN messages with the third priority in each cycle.
In the embodiments of this application, the current load rate of the CAN bus is controlled by controlling N and t, so as to implement the load reduction of the CAN bus. More specifically, in specific applications, a CAN message gateway controller of the whole vehicle can be regarded as a responsible party for monitoring the bus load rate, and can control the transmission strategy of each network node (ECU) on a bus architecture by transmitting the control signal bit of the priority message of the bus load rate. In the priority message of the bus load rate, each bit represents a CAN message with a specified priority of a specified ECU. For example, a bus load control signal name BusLoad_C_Enable for controlling the third priority (C) and a bus load control signal name BusLoad_B_Enable for controlling the second priority (C) can be defined. The message with the first priority (A) should be real-time, and the most important thing is that the message is irrespective of being controlled.

The message gateway controller can generate a priority message of each of the network nodes according to a load reduction processing strategy determined by the method provided in this application, set a control signal bit of each priority in the priority message, and transmit the control signal bit to each of the network nodes to control a transmission strategy of a current CAN message of each of the network nodes;

where if a control signal bit of the CAN message with the third priority is 1, the message gateway controller controls the CAN message with the third priority of the network nodes to be normally transmitted in a current transmission cycle; or if a control signal bit of the CAN message with the third priority is 1, the message gateway controller controls the CAN message with the third priority of the network nodes not to be transmitted in a current transmission cycle; and if a control signal bit of the CAN message with the second priority is 1, the message gateway controller controls the CAN message with the second priority of the network nodes to be normally transmitted in a current transmission cycle; or if a control signal bit of the CAN message with the second priority is 0, the message gateway controller controls the CAN message with the second priority of the network nodes to be transmitted in a predetermined extended transmission cycle.

On a network node end, in a case that the network node of the same channel receives the control signal bit of the third priority (C), if the bit corresponding to the ECU is 1, the messages with the third priority are allowed for normal transmission; or if the bit is 0, the messages with the third priority are not allowed for transmission. In a case that the network node of the same channel receives the control signal bit of the second priority (B), if the bit corresponding to the ECU is 1, the messages with the second priority are allowed for transmission in a normal cycle; or if the bit is 0, the messages with the second priority are allowed for transmission in a slow cycle.

In the method of this application, a main monitoring node (which is generally a gateway controller) is defined in the CAN node of the same channel and used for monitoring the bus load rate. If the load rate is excessively high, the main monitoring node makes timely response to controlling a quantity of ECUs allowed to transmit the messages with the third priority (C) and the peak-shifting strategy for adjusting the transmission cycle for transmitting the messages with the second priority (B), thereby implementing the real-time control of the excessively high bus load rate.

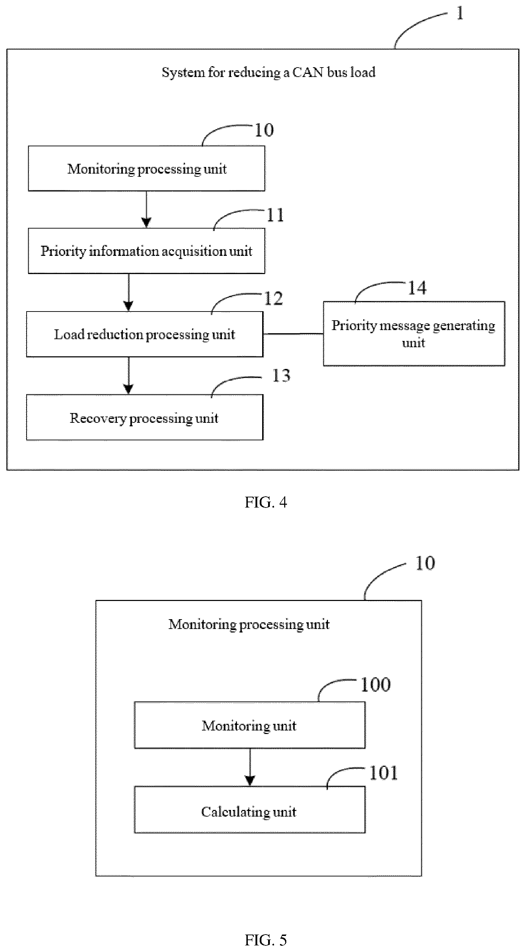

FIG. 4 shows a structural diagram of a system for reducing a CAN bus load according to an embodiment of this application. Referring to FIG. 5 to FIG. 7, in this embodiment, the system 1 for reducing a CAN bus load includes at least:

a monitoring processing unit 10, configured to perform real-time monitoring to obtain a current load rate of all network nodes of a same channel on the CAN bus;

a priority information acquisition unit 11, configured to: when the monitored current load rate is greater than a preset maximum load rate threshold, acquire priority information of each CAN message transmitted by all the network nodes of the channel in a current cycle; and

a load reduction processing unit 12, configured to acquire a strategy that is adopted by each of the network nodes and corresponds to a priority level of the CAN message to perform load reduction adjustment on the CAN message of at least one priority, where the load reduction adjustment includes at least dynamic peak-shifting transmission or/and transmission cycle extension.

As shown in FIG. 5, in a specific embodiment, the monitoring processing unit 10 further includes:

a monitoring unit 100, configured to monitor all CAN messages on the CAN bus; and

a calculating unit 101, configured to calculate an actual total CAN bus load in the current cycle, and divide the actual total CAN bus load by a maximum theoretical CAN bus load to obtain the current load rate.

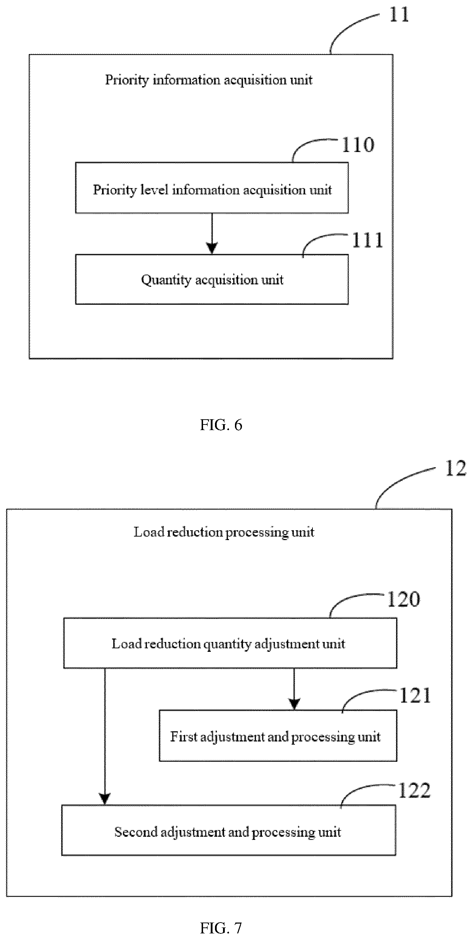

As shown in FIG. 6, in a specific embodiment, the priority information acquisition unit 11 further includes:

a priority level information acquisition unit 110, configured to acquire a priority of each CAN message transmitted by all the network nodes of the channel in the current cycle, where the priority includes a maximum priority, a second priority and a third priority; and

a quantity acquisition unit 111, configured to acquire at least a quantity of CAN messages with the third priority.

As shown in FIG. 7, in a specific embodiment, the load reduction processing unit 12 further includes:

a load reduction quantity adjustment unit 120, configured to: gradually reduce the quantity of CAN messages with the third priority transmitted in each cycle, and determine whether the adjusted CAN bus load of the channel is less than the maximum load rate threshold;

a first adjustment and processing unit 121, configured to: if the load reduction quantity adjustment unit determines that the adjusted CAN bus load of the channel is less than the maximum load rate threshold, control, in each cycle, to transmit only the reduced quantity of CAN messages with the third priority in a dynamic circular peak-shifting transmission manner, where the reduced quantity is at least one; and

Specifically, in the first adjustment and processing unit 121, the controlling, in each cycle, to transmit only the reduced quantity of CAN messages with the third priority in a dynamic circular peak-shifting transmission manner specifically includes:

in the current transmission cycle, selecting and transmitting the reduced quantity of CAN messages with the third priority;

in a next transmission cycle, selecting and transmitting the reduced quantity of next CAN messages with the third priority in a predetermined order; and

continuing such an operation cyclically to make each of the CAN messages with the third priority be transmitted in sequence and cyclically.

a second adjustment and processing unit 122, configured to: if the load reduction quantity adjustment unit determines that the adjusted CAN bus load of the channel is not less than the maximum load rate threshold, control, in each cycle, to transmit only one of the CAN messages with the third priority in a dynamic circular peak-shifting transmission manner, and extend a transmission cycle of each CAN message with the second priority.

Referring to FIG. 4, the system 1 for reducing a CAN bus load further includes:

a recovery processing unit 13, configured to: after the load reduction adjustment, if the current load rate of all the network nodes of the channel is greater than a preset minimum load rate threshold, gradually recover a transmission cycle of the CAN message with the second priority, and gradually recover a quantity of transmitted CAN messages with the third priority in each cycle;

a priority message generating unit 14, configured to: generate a priority message of each of the network nodes according to a load reduction processing strategy determined by the load reduction processing unit; set a control signal bit of each priority in the priority message, and transmit the control signal bit to each of the network nodes to control a transmission strategy of a current CAN message of each of the network nodes;

where if a control signal bit of the CAN message with the third priority is 1, control the CAN message with the third priority of the network nodes to be normally transmitted in a current transmission cycle; or if a control signal bit of the CAN message with the third priority is 1, control the CAN message with the third priority of the network nodes not to be transmitted in a current transmission cycle; and

if a control signal bit of the CAN message with the second priority is 1, the message gateway controller controls the CAN message with the second priority of the network nodes to be normally transmitted in a current transmission cycle; or if a control signal bit of the CAN message with the second priority is 0, the message gateway controller controls the CAN message with the second priority of the network nodes to be transmitted in a predetermined extended transmission cycle.

Still another aspect of this application further provides a computer-readable storage medium on which a computer program is stored, where when the computer program is executed by a processor, the steps of the method as described in FIG. 1 to FIG. 3 are implemented. For more details, reference to the foregoing descriptions of FIG. 1 to FIG. 3 is made. The details are not described herein again.

Yet another aspect of this application further provides a computing apparatus, where the computing apparatus includes a memory, a processor, and a computer program that is stored in the memory and executable on the processor, where when the computer program is executed by the processor, the steps of the method as described in FIG. 1 to FIG. 3 are implemented. For more details, reference to the foregoing descriptions of FIG. 1 to FIG. 3 is made. The details are not described herein again.

Still yet another aspect of this application further provides a vehicle, and the vehicle has a CAN bus architecture, where the CAN bus architecture includes at least one CAN message gateway controller and a plurality of network nodes (such as ECU) connected to a CAN bus, where

the system for reducing a CAN bus load as described in FIG . 4 to FIG. 7 is deployed in the CAN message gateway controller;

each of the network nodes is used for monitoring a control signal bit of a priority message from the CAN message gateway controller and determining a transmission strategy of a CAN message thereof, and the determining a transmission strategy of a CAN message thereof includes:

if a control signal bit of a CAN message with a third priority is 1, normally transmitting the CAN message with a third priority in a current transmission cycle; or if a control signal bit of a CAN message with a third priority is 0, not transmitting the CAN message with a third priority in a current transmission cycle; and

if a control signal bit of a CAN message with a second priority is 1, normally transmitting the CAN message with a second priority in a current transmission cycle; or if a control signal bit of a CAN message with a second priority is 0, normally transmitting the CAN message with a second priority in a predetermined extended transmission cycle.

For more details, reference to the foregoing descriptions of FIG. 1 to FIG. 7 is made. The details are not described herein again.

The embodiments of this application have the following beneficial effects:

This application provides a method, a system, a computing apparatus, a storage medium, and a vehicle for reducing a bus load. A main monitoring node (such as a gateway controller) is defined in the CAN node of the same channel and used for monitoring the bus load rate. If the current load rate is excessively high, the main monitoring node makes timely response to controlling the reduction of the quantity of messages with the lowest priority and the delay of the transmission cycle of messages with the second lowest priority, thereby implementing a peak-shifting transmission strategy. The method and the system provided in this application can better reduce the bus load rate dynamically and improve the safety and efficiency of CAN bus communication.

A bus load rate control mechanism provided in this application can well avoid the risk of function loss due to the excessively high bus load rate in the complex operating condition, and improve the bus stability of the whole vehicle.

The method provided in this application can greatly reduce an information interaction pressure between key nodes at the long-term excessively high load rate, so that the real-time performance of key information (high-priority CAN messages) can be guaranteed at all times, and information availability can be maintained.

It should be understood by those skilled in the art that embodiments of this application can provide a method, an apparatus, or a computer program product. Therefore, a full hardware embodiment, a full software embodiment, or a software-hardware combined embodiment can be used in this application. Moreover, a computer program product implemented on one or more computer-usable storage media (including but not limited to disk memory, CD-ROM, and optical memory) including computer-usable program code can be used in this application.

This application is described with reference to a flowchart of a method, a block diagram of a device (system), and a flowchart and/or block diagram of a computer program product according to the embodiments of this application. It should be understood that each step and/or block in the flowchart and/or block diagram, and a combination of the step and/or block in the flowchart and/or block diagram can be implemented by computer program instructions. These computer program instructions may be provided for a processor of a general-purpose computer, special-purpose computer, an embedded processing unit or other programmable data processing devices to generate a machine, so that the instructions executed by the processor of the computer or other programmable data processing devices generate an apparatus for implementing one or more steps in the flowchart and/or functions specified in one block or multiple blocks in the block diagram.

The above disclosure is only a preferred embodiment of this application, and certainly cannot be used to limit the scope of this application, so the equivalent changes made according to the claims of this application still fall within the scope of this application.

## Claims

1. A method for reducing a CAN bus load, comprising at least the following steps:

performing real-time monitoring to obtain a current load rate of all network nodes of a same channel on the CAN bus;

when the monitored current load rate is greater than a preset maximum load rate threshold, acquiring priority information of each CAN message transmitted by all the network nodes of the channel in a current cycle; and acquiring a strategy that is adopted by each of the network nodes and corresponds to a priority level of the CAN message to perform load reduction adjustment on the CAN message of at least one priority, wherein the load reduction adjustment comprises at least dynamic peak-shifting transmission or/and transmission cycle extension.

2. The method according to claim 1, wherein the performing real-time monitoring to obtain a current load rate of all network nodes of a same channel on the CAN bus further comprises: monitoring all CAN messages on the CAN bus; calculating an actual total CAN bus load in the current cycle; and dividing the actual total CAN bus load by a maximum theoretical CAN bus load to obtain the current load rate.

3. The method according to claim 2, wherein when the monitored current load rate is greater than a preset maximum load rate threshold, the acquiring priority information of each CAN message transmitted by all the network nodes of the channel in a current cycle further comprises:

    acquiring a priority of each CAN message transmitted by all the network nodes of the channel in the current cycle, wherein the priority comprises a maximum priority, a second priority and a third priority; and
    acquiring a quantity of CAN messages with the third priority.

4. The method according to claim 3, wherein the acquiring a strategy that is adopted by each of the network nodes and corresponds to a priority level of the CAN message to perform load reduction adjustment on the CAN message of at least one priority further comprises:

    gradually reducing the quantity of CAN messages with the third priority transmitted in each cycle; and determining whether the adjusted CAN bus load of the channel is less than the maximum load rate threshold; and
    if the adjusted CAN bus load of the channel is less than the maximum load rate threshold, controlling, in each cycle, to transmit only the reduced quantity of CAN messages with the third priority in a dynamic circular peak-shifting transmission manner, wherein the reduced quantity is at least one; or
    if the adjusted CAN bus load of the channel is not less than the maximum load rate threshold, controlling, in each cycle, to transmit only one of the CAN messages with the third priority in a dynamic circular peak-shifting transmission manner, and extending a transmission cycle of each CAN message with the second priority.

5. The method according to claim 4, further comprising: after the load reduction adjustment, if the current load rate of all the network nodes of the channel is greater than a preset minimum load rate threshold, gradually recovering a transmission cycle of the CAN message with the second priority, and gradually recovering a quantity of transmitted CAN messages with the third priority in each cycle.

6. The method according to claim 4 or claim 5, wherein the controlling, in each cycle, to transmit only the reduced quantity of CAN messages with the third priority in a dynamic circular peak-shifting transmission manner specifically comprises:

    in the current transmission cycle, selecting and transmitting the reduced quantity of CAN messages with the third priority;
    in a next transmission cycle, selecting and transmitting the reduced quantity of next CAN messages with the third priority in a predetermined order; and
    continuing such an operation cyclically to make each of the CAN messages with the third priority be transmitted in sequence and cyclically.

7. The method according to claim 6, further comprising:

    generating a priority message of each of the network nodes according to the determined load reduction adjustment manner; setting a control signal bit of each priority in the priority message, and transmitting the control signal bit to each of the network nodes to control a transmission strategy of a current CAN message of each of the network nodes;
    wherein if a control signal bit of the CAN message with the third priority is 1, controlling the CAN message with the third priority of the network nodes to be normally transmitted in a current transmission cycle; or if a control signal bit of the CAN message with the third priority is 0, controlling the CAN message with the third priority of the network nodes not to be transmitted in a current transmission cycle; and
    if a control signal bit of the CAN message with the second priority is 1, controlling the CAN message with the second priority of the network nodes to be normally transmitted in a current transmission cycle; or if a control signal bit of the CAN message with the second priority is 0, controlling the CAN message with the second priority of the network nodes to be transmitted in a predetermined extended transmission cycle.

8. A system for reducing a CAN bus load, comprising at least:

a monitoring processing unit, configured to perform real-time monitoring to obtain a current load rate of all network nodes of a same channel on the CAN bus;

a priority information acquisition unit, configured to: when the monitored current load rate is greater than a preset maximum load rate threshold, acquire priority information of each CAN message transmitted by all the network nodes of the channel in a current cycle; and

a load reduction processing unit, configured to acquire a strategy that is adopted by each of the network nodes and corresponds to a priority level of the CAN message to perform load reduction adjustment on the CAN message of at least one priority, wherein the load reduction adjustment comprises at least dynamic peak-shifting transmission or/and transmission cycle extension.

9. The system according to claim 8, wherein the monitoring processing unit further comprises:

a monitoring unit, configured to monitor all CAN messages on the CAN bus; and

a calculating unit, configured to calculate an actual total CAN bus load in the current cycle, and divide the actual total CAN bus load by a maximum theoretical CAN bus load to obtain the current load rate; and

the priority information acquisition unit further comprises:

a priority level information acquisition unit, configured to acquire a priority of each CAN message transmitted by all the network nodes of the channel in the current cycle, wherein the priority comprises a maximum priority, a second priority and a third priority; and

a quantity acquisition unit, configured to acquire at least a quantity of CAN messages with the third priority.

10. The system according to claim 9, wherein the load reduction processing unit further comprises:

a load reduction quantity adjustment unit, configured to: gradually reduce the quantity of CAN messages with the third priority transmitted in each cycle, and determine whether the adjusted CAN bus load of the channel is less than the maximum load rate threshold;

a first adjustment and processing unit, configured to: if the load reduction quantity adjustment unit determines that the adjusted CAN bus load of the channel is less than the maximum load rate threshold, control, in each cycle, to transmit only the reduced quantity of CAN messages with the third priority in a dynamic circular peak-shifting transmission manner, wherein the reduced quantity is at least one; and

a second adjustment and processing unit, configured to: if the load reduction quantity adjustment unit determines that the adjusted CAN bus load of the channel is not less than the maximum load rate threshold, control, in each cycle, to transmit only one of the CAN messages with the third priority in a dynamic circular peak-shifting transmission manner, and extend a transmission cycle of each CAN message with the second priority.

11. A computer-readable storage medium on which a computer program is stored, wherein when the computer program is executed by a processor, the steps of the method according to any one of claims 1 to 7 are implemented.

12. A computing apparatus, comprising a memory, a processor, and a computer program that is stored in the memory and executable on the processor, wherein when the computer program is executed by the processor, the steps of the method according to any one of claims 1 to 7 are implemented.

13. A vehicle having a CAN bus architecture, wherein the CAN bus architecture comprises at least one CAN message gateway controller and a plurality of network nodes connected to a CAN bus, wherein

the system for reducing a CAN bus load according to any one of claims 8 to 10 is deployed in the CAN message gateway controller;

each of the network nodes is used for monitoring a control signal bit of a priority message from the CAN message gateway controller and determining a transmission strategy of a CAN message thereof, and the determining a transmission strategy of a CAN message thereof comprises:

if a control signal bit of a CAN message with a third priority is 1, normally transmitting the CAN message with a third priority in a current transmission cycle; or if a control signal bit of a CAN message with a third priority is 0, not transmitting the CAN message with a third priority in a current transmission cycle; and

if a control signal bit of a CAN message with a second priority is 1, normally transmitting the CAN message with a second priority in a current transmission cycle; or if a control signal bit of a CAN message with a second priority is 0, normally transmitting the CAN message with a second priority in a predetermined extended transmission cycle.

S10

Perform real-time monitoring to obtain the current load rate of all network nodes of the same channel on the CAN bus

S11

When the monitored current load rate is greater than a preset maximum load rate threshold, acquire priority information of each CAN message transmitted by all the network nodes of the channel in a current cycle

S12

Acquire the strategy that is adopted by each network node that corresponds to a priority level of the CAN message to perform load reduction adjustment on the CAN message of at least one priority, where the load reduction adjustment includes at least dynamic peak-shifting transmission or/and transmission cycle extension

FIG. 1

| SOF | Arbitration field | Control field | Data field (Load) | CRC field | ACK field | EOF | IMF |
|------|-------------------|---------------|-------------------|--------------|-----------|------|------|
| 1bit | 12 or 32 bit | 8 or 9 bit | 0~64byte | 28 or 33 bit | 2bit | 7bit | 3bit |

MSB                                                                                                    LSB

FIG. 2

FIG. 3

FIG. 4

FIG. 5

11

Priority information acquisition unit

110

Priority level information acquisition unit

111

Quantity acquisition unit

FIG. 6

12

Load reduction processing unit

120

Load reduction quantity adjustment unit

121

First adjustment and processing unit

122

Second adjustment and processing unit

FIG. 7

## INTERNATIONAL SEARCH REPORT

| International application No. |
|---|
| **PCT/CN2023/115335** |

### A. CLASSIFICATION OF SUBJECT MATTER

H04L12/40(2006.01)i;  H04L47/10(2022.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; VEN; ENTXTC; ENTXT; VCN; CNKI; IEEE: 总线, 报文, 数据包, 数据流, 阈值, 门限, 最大值, 超过, 大于, 小于, 超出, 负载率, 负载因子, 负荷率, 负荷因子, 负荷比, 负载比, 载荷率, 载流率, 荷载率, 减小, 减少, 降低, 增加, 变大, 提高, 数量, 个数, 周期, 延时, 延长, 变少, 错峰, threshold, loading rate, reduce, increase, number, period, bus, message

### C. DOCUMENTS CONSIDERED TO BE RELEVANT

| Category* | Citation of document, with indication, where appropriate, of the relevant passages | Relevant to claim No. |
|---|---|---|
| X | CN 113852563 A (SHENZHEN LAUNCH TECHNOLOGY CO., LTD.) 28 December 2021 (2021-12-28)<br>description, paragraphs [0084]-[0192] | 1-3, 8, 9, 11, 12 |
| X | CN 112769714 A (JIANGSU XCMG CONSTRUCTION MACHINERY RESEARCH INSTITUTE CO., LTD.) 07 May 2021 (2021-05-07)<br>description, paragraphs [0045]-[0122] | 1-3, 8, 9, 11, 12 |
| Y | CN 113852563 A (SHENZHEN LAUNCH TECHNOLOGY CO., LTD.) 28 December 2021 (2021-12-28)<br>description, paragraphs [0084]-[0192] | 1-3, 8, 9, 11, 12 |
| Y | CN 112769714 A (JIANGSU XCMG CONSTRUCTION MACHINERY RESEARCH INSTITUTE CO., LTD.) 07 May 2021 (2021-05-07)<br>description, paragraphs [0045]-[0122] | 1-3, 8, 9, 11, 12 |
| X | CN 109962858 A (ZHENGZHOU YUTONG BUS CO., LTD.) 02 July 2019 (2019-07-02)<br>description, paragraphs [0023]-[0036] | 1-3, 8, 9, 11, 12 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2023** | **23 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/115335** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 20190081958 A (YURA CORPORATION CO., LTD.) 09 July 2019 (2019-07-09) entire document | 1-13 |

Form PCT/ISA/210 (second sheet) (July 2022)

**INTERNATIONAL SEARCH REPORT**
Information on patent family members

| | | |
|---|---|---|
| International application No. | | |
| | **PCT/CN2023/115335** | |

| Patent document cited in search report | | | Publication date (day/month/year) | Patent family member(s) | | Publication date (day/month/year) |
|---|---|---|---|---|---|---|
| CN | 113852563 | A | 28 December 2021 | None | | |
| CN | 112769714 | A | 07 May 2021 | None | | |
| CN | 109962858 | A | 02 July 2019 | None | | |
| KR | 20190081958 | A | 09 July 2019 | KR 102450311 | B1 | 04 October 2022 |